# EUROPÄISCHE PATENTANMELDUNG

(11) **EP 0 867 675 A2**
(43) Veröffentlichungstag der Anmeldung: **30.09.1998**
(21) Anmeldenummer: 98108115.1
(22) Anmeldetag: 01.07.1996
(51) Int. Cl.: F26B 21/00, F26B 15/16

(54) **Tunneltrockner-Anlage zum Trocknen von in Höhenrichtung durchströmbarem Ziegel-Belag**

(30) Priorität: 30.06.1995 DE 19523439
(62) Teilanmeldung aus: 96110622.6
(71) Anmelder: Keller GmbH, 49479 Ibbenbüren-Laggenbeck (DE)
(72) Erfinder: Averbeck, Laurenz, Dipl.-Ing., 49186 Bad Iburg (DE); Lindemann, Helmut, Dipl.-Ing., 49497 Mettingen (DE); Schrameyer, Michael, Dipl.-Ing., 49477 Ibbenbüren (DE)

(57) **Zusammenfassung**

Die Erfindung betrifft eine Tunneltrockner-Anlage zum Trocknen von in der Höhenrichtung durchströmbarem Ziegel-Belag, insbesondere bestehend aus auf den Schnittflächen aufliegend transportierten Lochziegel-Formlingen (5) oder Dachziegeln in Vertikal- oder Schrägstellung, mit einem Trockentunnel (1), welcher von den Ziegel-Belag tragenden luftdurchströmbaren Transportunterlagen (4) durchfahren wird. Das Erfindungswesentliche besteht darin, daß
a) der Tunneltrockner (1) für einen Formlingstransport von max. 800 mm Stapelhöhe aus gebildet ist,
b) zur Formlingsbeblasung quer zur Transportrichtung (T) verlaufende sowie von einer seitlich neben dem Trockentunnel vorgesehenen Mischkammer (8) aus mittels eines Ventilators (12) mit heißer Trocknungsluft versorgte Düsenkästen (7,7') gegeneinander versetzt oberhalb und unterhalb der Formlingsbewegungbahn angeordnet sind und
c) die unteren Düsenkästen (7') in Trocknerwagen (2) integriert sind.

## Beschreibung

Die Erfindung bezieht sich auf eine Tunneltrockner-Anlage gemaß Oberbegriff des Patentanspruchs 1.

Eine gattungsbildende Tunneltrockner-Anlage für die Lochziegel-Trocknung ist bereits durch EP 0 343 618 A2 bekannt. Dabei besteht noch der Nachteil einer verhältnismäßig schlechten Durchlüftung der einzelnen Lochziegel-Rohlinge, weil die Trocknungsluft nur an einem Tunnelende eingeblasen wird. Durch die einendige Lufteinblasung muß die Trocknungsluft-Zuführung mit hohem Überdurck erfolgen, gegen welchen eine Konditionierungsluft wirken muß (um überhaupt in den Trockenkanal zu gelangen und es wird die Konditionierung erschwert.

Der Erfindung liegt die Aufgabe zugrunde, eine einfach aufgebaute Tunneltrocknungs-Anlage für in der Höhenrichtung durchströmbarem Ziegel-Belag zu schaffen, bei der mit geringerem Überdruck im Trocknungskanal sowie für die Konditionierung gearbeitet werden kann und trotzdem eine gleichmäßige und gute Durchströmung des Von Mauer- oder Dachziegeln gebildeten Trocknungsgutes/Belags gewährleistet ist.

Dies wird durch eine Trocknungsanlage gemäß Patentanspruch 1 erzielt. Weiterbildungen ergeben sich aus den Unteransprüchen.

Bei der erfindungsgemäßen Tunneltrockner-Anlage wird eine gezielte und intensive Durchströmung des Trocknungsgutes (d. h. des sogenannten Belags) erreicht. Von großem Vorteil ist die kurze Blasstrecke zwischen den Trocknungsluft-Ausblasstellen und dem Ziegel-Belag (Trocknungsgut). Es wird aufgrund der bevorzugten doppellagigen Formlingsstapelung bei der Maurziegel-Fertigung einerseits eine wesentlich größere - nämlich doppelte - Ziegelmenge als bei einlagiger Arbeitsweise getrocknet und andererseits der Vorteil kurzer Produktdurchströmung aufgrund noch kurzer Kanäle beibehalten und eine große Trocknungsleistung ohne trocknungsbedingte Rißbildung erzielt. Die kurzen Umwälzkreise mit gleichmäßiger Luftströmung auf gesamter Tunnelbreite bewirken bei geringem Energieverbrauch eine hohe Luftströmung, womit die Lochziegel oder die Dachziegel (aufrecht oder schrägstehend) gleichmäßig umströmt und Lochziegel auch gleichmäßig durchströmt werden. Mit dem erfindungsgemäßen Tunneltrockner-System lassen sich kurze Reisezeiten von unter 10 Stunden, bei manchen Materialien sogar von etwa 5 Stunden realisieren. Aufgrund erheblicher Energie- und Investitionseinsparung sowie Qualitätssteigerung ist die Erfindung von großem wirtschaftlichen Nutzen.

Auf der Zeichnung ist ein Ausführungsbeispiel der Erfindung dargestellt. Es zeigen:
- Fig. 1: eine Längsschnitt-Darstellung eines Teilbereichs einer erfindungsgemäßen Tunneltrockner-Anlage, bei der das Trocknungsgut abwechselnd von oben und unten beblasen wird und die Trocknerwagen mit Querabschottungen zur Kanal-Bildung (für die in den Belag strömende Blasluft oder Abführung der ausströmenden Luft) ausgeführt sind,

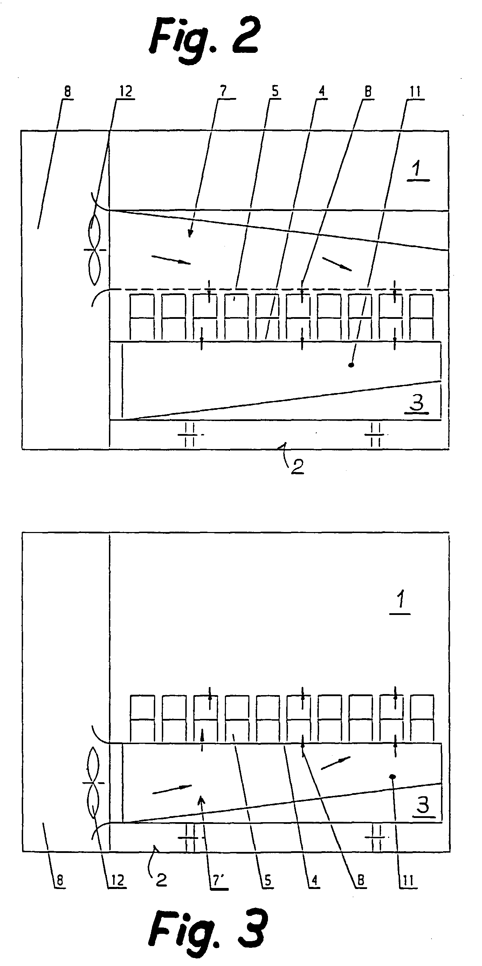

- Fig. 2: einen Querschnitt der Anlage gemäß Fig. 1 im Bereich einer Station zur Beblasung von oben und
- Fig. 3: einen Querschnitt der Anlage gemäß Fig. 1 im Bereich einer Station zur Beblasung von unten.

Die Erfindung betrifft einen insgesamt mit 1 bezifferten Tunneltrockner für Mauerziegel, insbesondere Lochziegel, und Dachziegel. Für die Lochziegel-Fertigung erfolgt eine Formlingsanordnung aufden Schnittflächen. Dementsprechend werden die Mauerziegel-Löcher vertikal durchströmt und während des Transports durch den Tunneltrockner 1 getrocknet werden. Dachziegel-Formlinge werden in Vertikal- oder Schrägstellung getrocknet.

Zwecks Steigerung der Produktion wird das insbesondere aus Lochziegel-Formlingen bekannter Abmessungen bestehende Trocknungsgut (der sogen. Belag) doppellagig gestapelt, bei kleinem Maß zwischen den beiden Schnittflächen kann auch eine dreilagige Formlingsanordnung erfolgen - bis zu einer Stapelhöhe von max. 800 mm. Dachziegel werden einlagig getrocknet, wobei diese Formlinge vertikal oder aus der Vertikalen geneigt durch den Tunneltrockner transportiert werden.

Oberhalb der zu trocknenden Formlinge verbleibt in jedem Fall ein Spalt von geringer Höhe, max 100 mm Höhe, bis zur Trocknungsluft-Ausblasstelle.

Auf einem Tunnelboden 2 ist eine Laufbahn für vertikal luftdurchströmbare Trocknerwagen 3 vorhanden, deren formlingstragende Transportunterlagen mit 4 beziffert sind.

Formlinge 5 werden durch hintereinanderliegende sowie in Tunnellängsrichtung umwälzende Umwälzkreise des ansonsten im Gegenstrom zur Transportrichtung T durchlüfteten und zonenweise mit entsprechend den Erfodernissen konditionierter heißer Luft versorgten Trockentunnels bewegt. Die Pfeile in der Zeichnung bedeuten:
B = Beblasung- und Durchströmungsrichtung
L = Luft-Längsströmung durch den Trockentunnel
L' = Feuchtluft-Abführung
T = Transportrichtung des zu trocknenden Gutes

In jedem Umwälzkreis werden die Formlinge 5 an einer einen gezielten vertikalen Luftstrom B durch das Trocknungsgut blasenden Ventilationseinrichtung taktweise oder kontinuierlich vorbeigeführt.

Die Formlinge 5 werden auf ihren Schnittflächen aufliegend transportiert und mittels wechselweise oberhalb und unterhalb der Formlingsbewegungsbahn angeordneter Düsenkästen 7, 7' angeblasen und dabei über vertikale Luftströmung gezielt sowie intensiv durchlüftet. Dabei wird jeder Formling 5 mittels erzwungener Konvektion gleichmäßig umströmt und durchströmt.

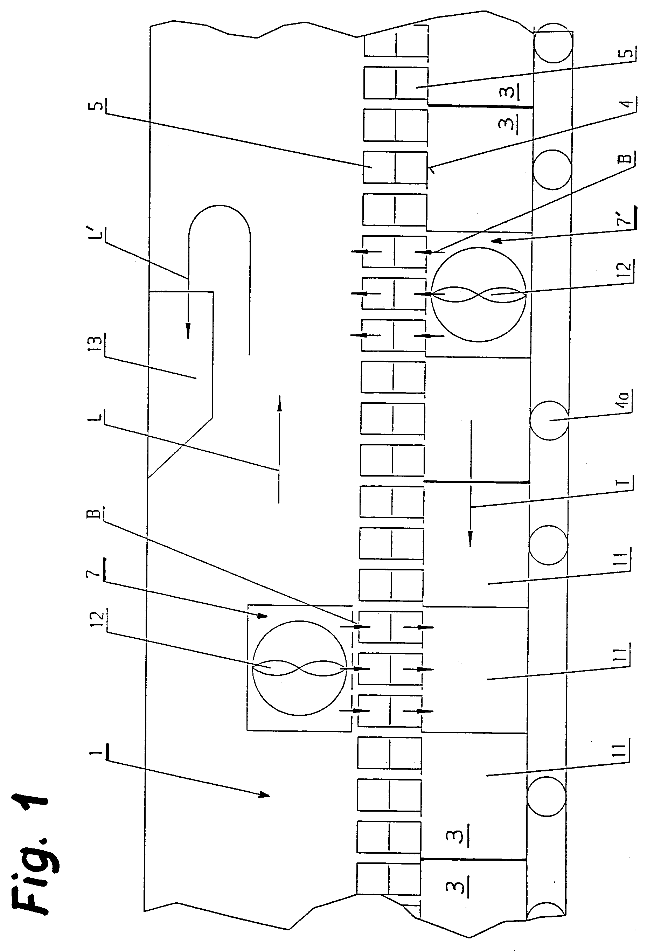

Die Düsenkästen 7, 7' sind abwechselnd nach oben und nach unten blasend vorgesehen. Sie besitzen einen die Luft im wesentlichen vertikal ausblasenden Luftauslaß und werden von einem Düsenkasten-Stirnende aus mit entsprechend den Erfordernissen konditionierter Trocknungsluft versorgt, in bevorzugter Weise sind sie an einer gemeinsamen seitlichen Luftkammer, insbesondere Mischkammer 8, angeschlossen. Wie aus Fig. 1 zu ersehen, sind die Trocknerwagen 3 mit Querabschottungen zur Blasluft- und Abluft-Führung versehen.

Bei der dargestellten Ausführungsform werden zwischen den entgegengesetzten vertikalen Luftbewegungen B jeweils 3 Formlings-Querreihen beblasen.

Die Düsenkästen 7, 7' können als Breitschlitzdüsen ausgebildet sein, wobei sich in Transportrichtung nur eine kurze Ausblaslänge, ergibt oder aber (was nicht dargestellt ist) in Transportrichtung eine Länge von einem oder mehreren zu beblasenden Ziegelformlingen (Lochziegelformlingen) aufweisen, wobei eine größere Fläche gleichmäßig beblasen wird. Besonders vorteilhaft ist eine Ausbildung, bei der zwei oder mehr Lochziegel-Querreihen beblasen werden.

Das Düsenkasten-Innere ist stets derart gestaltet, daß sich auf gesamtes Transportbreite eine gleichmäßige Luftausströmung ergibt - insbesondere verjüngt sich der Blaskanal querschnittsmäßig vom Ventilaltorende aus zum ventilatorlosen Ende hin.

Die Zeichnung offenbart Trocknerwagen 3 mit einer luftdurchströmbaren Transport-Auflage für Mauerziegel, insbesondere Lochziegel - es können jedoch auch Halterungen für Dachziegel angeordnet sein, um solche in Vertikalstellung oder Schrägstellung aufzunehmen.

In jedem Fall ist der Wagenaufbau in als Düsenkästen wirkende Wannen 11 unterteilt, welche am mischkammerseitigen Ende vor einem Ventilator 12 enden und dementsprechend einen großen Querschnitt haben und sich zum anderen Ende hin querschnittsmäßig verjüngen. Eine Wanne 11 und Ventilator 12 bilden einen "Düsenkasten".

Wie aus Fig. 1 zu ersehen ist, ist abwechselnd eine Formlingsbeblasung von oben und von unten vorgesehen, wobei die "Düsenkästen" für die Beblasung von unten im Trocknerwagen integriert sind. Vorzugsweise liegen in jedem Trocknerwagen mehrere Wannen 11 hintereinander, welche das eine Mal als Blaskanal und das andere Mal als Luftableitkanal dienen. Die obere Luftabführung erfolgt über einen mit 13 bezifferten Absaug- oder Abbleitkanal, welcher mit einer "Mischkammer" 8 für die Mischung und/oder die Zufuhr von heißer Trocknungsluft zu einem wageneigenen Düsenkasten/Luftleitkanal (Pos. 11) verbunden ist, so daß sich letztendlich eine tunnelinterne Umwälzung ergibt.

## Patentansprüche

1. Tunneltrockner-Anlage zum Trocknen von in der Höhenrichtung durchströmbarem Ziegel-Belag, insbesondere bestehend aus auf den Schnittflächen aufliegend transportierten Lochziegel-Formlingen oder Dachziegeln in Vertikal- oder Schrägstellung, mit einem Trockentunnel, welcher von den Ziegel-Belag tragenden luftdurchströmbaren Transportunterlagen durchfahren wird und in dem Trocknungsluft, die entsprechend den Erfordernissen abschnittsweise konditioniert wird, im Gegenstrom zum Formlingstransport strömt und das verdunstete Wasser abtransportiert, wobei die Trocknungsluft das in niedriger Belaghöhe angeordnete Trocknungsgut abwechselnd von oben und unten durchströmt, dadurch gekennzeichnet, daß
a) der Tunneltrockner (1) für einen Formlingstransport von max. 800 mm Stapelhöhe ausgebildet ist,
b) zur Formlingsbeblasung quer zur Transportrichtung (T) verlaufende sowie von einer seitlich neben dem Trockentunnel vorgesehenen Mischkammer (8) aus mittels eines Ventilators (12) mit heißer Trocknungsluft versorgte Düsenkästen (7,7') gegeneinander versetzt oberhalb und unterhalb der Formlingsbewegungsbahn angeordnet sind und
c) die unteren Düsenkästen (7') in Trocknerwagen (3) integriert sind.

2. Anlage nach Anspruch 1, dadurch gekennzeichnet, daß die Trocknerwagen (3) mit mehreren in Transportrichtung (T) hintereinander liegenden und sich über die Wagenbreite längs erstreckenden wannenartigen Luftleitkanälen (11) versehen sind, welche einerseits für die Beblasung von unten mit einem im Tunnelwandbereich vorgesehenen Ventilator (12) einen Düsenkasten (7') und andererseits bei Beblasung von oben einen Luft-Ableitkanal für aus dem Trocknungsgut strömende Luft bildet.

3. Anlage nach Anspruch 1 oder 2, dadurch gekennzeichnet, daß die Düsenkastenkanäle (11) sich vom seitlichen Ventilator (12) aus zum anderen Ende hin querschnittsmäßig verjüngen.

4. Anlage nach einem der Ansprüche 1 bis 3, dadurch gekennzeichnet, daß zwecks tunnelinterner Umwälzung der Trocknungsluft eine obere Luftabführung (13) in Form eines Absaug- oder Ableitkanals vorhanden ist, welche mit einer Mischkammer (8), für die Mischung und/oder die Zufuhr von heißer Trocknungsluft, verbunden ist.
